(19) Europäisches Patentamt
European Patent Office
Office européen des brevets

(11) **EP 2 060 861 A1**

(12) **EUROPEAN PATENT APPLICATION**
published in accordance with Art. 153(4) EPC

(43) Date of publication:
**20.05.2009 Bulletin 2009/21**

(21) Application number: **07793059.2**

(22) Date of filing: **28.08.2007**

(51) Int Cl.:
*F25B 41/00* (2006.01)     *F04B 39/00* (2006.01)
*F16L 55/04* (2006.01)     *F25B 1/00* (2006.01)
*F25B 43/00* (2006.01)

(86) International application number:
**PCT/JP2007/066615**

(87) International publication number:
**WO 2008/026568 (06.03.2008 Gazette 2008/10)**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(30) Priority: **30.08.2006 JP 2006233673**

(71) Applicant: **Daikin Industries, Ltd.
Osaka 530-8323 (JP)**

(72) Inventors:
• **ISHIKAWA, Satoshi
Maebaru-shi
Fukuoka 819-1107 (JP)**

• **MASUDA, Masanori
Sakai-shi
Osaka 591-8511 (JP)**
• **HIGUCHI, Masahide
Kusatsu-shi
Shiga 525-8526 (JP)**

(74) Representative: **Goddar, Heinz J.
Forrester & Boehmert
Pettenkoferstrasse 20-22
80336 München (DE)**

(54) **REFRIGERATION SYSTEM**

(57)     It is an object of the present invention to sufficiently reduce pressure pulsation in a refrigeration system that employs carbon dioxide or the like as a refrigerant. A refrigeration system (1) pertaining to the present invention comprises a compression mechanism (11), a radiator (13, 31), an expansion mechanism (15, 17), an evaporator (13, 31) and a π-type silencer 20. The π-type silencer includes a first silencing space (201), a second silencing space (202) and a first communication path (203). The first communication path allows the first silencing space and the second silencing space to be communicated. Additionally, the π-type silencer is incorporated in at least one of a section between a refrigerant discharge side of the compression mechanism and an inlet side of the radiator and a section between an outlet side of the evaporator and a refrigerant suction side of the compression mechanism.

FIG. 1

**Description**

## TECHNICAL FIELD

The present invention relates to a refrigeration system and particularly to a refrigeration system that can reduce pressure pulsation.

## BACKGROUND ART

In recent years, refrigeration systems that employ carbon dioxide as a refrigerant have become commoditized. However, when carbon dioxide is employed as a refrigerant in a refrigeration system in this manner, there arises the problem that the density of the refrigerant and the speed of sound in the refrigerant become larger and pressure pulsation inevitably becomes larger. In order to counter this problem, in recent years, various methods of reducing pressure pulsation in refrigeration systems have been proposed (e.g., see patent citation 1, patent citation 2, non-patent citation 1 and non-patent citation 2).

Patent Citation 1: JP-A No. 6-10875
Patent Citation 2: JP-A No. 2004-218934
Non-Patent Citation 1: Sakae Yamada and Iwao Ōtani, "Orifisu oyobi π-gata hairetsu kūkisō ni yoru myakudō jokyo", Transactions of the Japan Society of Mechanical Engineers (Second Part), December 1968, Vol. 34, No. 268, pp. 2139-2145.
Non-Patent Citation 2: The Japan Society of Mechanical Engineers, editor, "Jirei ni manabu ryūtai kanren shindō", First Edition, Gihodo Shuppan Co., Ltd., September 20, 2003, pp. 190-193.

## DISCLOSURE OF THE INVENTION

<Technical Problem>

It is an object of the present invention to sufficiently reduce pressure pulsation in a refrigeration system that employs carbon dioxide and the like as a refrigerant.

<Solution to the Problem>

A refrigeration system according to a first aspect of the present invention is the refrigeration system that is filled with carbon dioxide as a refrigerant and comprises a compression mechanism, a radiator, an expansion mechanism, an evaporator and a π-type silencer. The compression mechanism compresses the refrigerant. The radiator causes the refrigerant that is discharged from the compression mechanism to radiate heat. The expansion mechanism depressurizes the refrigerant that flows out from the radiator. The evaporator causes the refrigerant that flows out from the expansion mechanism to evaporate. The π-type silencer includes a first silencing space, a second silencing space and a first communication path. The first communication path allows the first silencing space and the second silencing space to be communicated. Additionally, the π-type silencer is incorporated in at least one of a section between a refrigerant discharge side of the compression mechanism and an inlet side of the radiator and a section between an outlet side of the evaporator and a refrigerant suction side of the compression mechanism.

In this refrigeration system, the π-type silencer is incorporated in at least one of a section between a refrigerant discharge side of the compression mechanism and an inlet side of the radiator and a section between an outlet side of the evaporator and a refrigerant suction side of the compression mechanism. For this reason, in this refrigeration system, pressure pulsation can be sufficiently reduced even when carbon dioxide is employed as a refrigerant.

A refrigeration system according to a second aspect of the present invention is the refrigeration system according to the first aspect of the present invention, wherein the compression mechanism is a rotary compression mechanism whose minimum number of rotations is $N_{min}$. Additionally, the length of the first communication path is longer than $S_1/2(1/V_1+1/V_2)(c/\pi N_{min})^2$ (where $S_1$ is the cross-sectional area of the communication path, $V_1$ is the volume of the first silencing space, $V_2$ is the volume of the second silencing space, c is the speed of sound in the refrigerant, $\pi$ is pi, and $N_{min}$ is the minimum number of rotations of the compression mechanism).

Incidentally, a cutoff frequency f of the π-type silencer is expressed by the following expression (1).

$$f = c/\pi\sqrt{\{S_1/2l_1(1/V_1+1/V_2)\}} \qquad (1)$$

(Here, c is the speed of sound in the refrigerant, $\pi$ is pi, $S_1$ is the cross-sectional area of the communication path, $l_1$ is the length of the communication path, $V_1$ is the volume of the first silencing space, and $V_2$ is the volume of the second silencing space.)

Here, in order to make the cutoff frequency f equal to or less than the minimum number of rotations of the compression mechanism, it is necessary to satisfy the following expression (2).

$$c/\pi\sqrt{\{S_1/2l_1(1/V_1+1/V_2)\}} < N_{min} \qquad (2)$$

Additionally, when this inequality expression (2) is solved in regard to $l_1$, it becomes the following expression (3).

$$l_i > S_1/2(1/V_1+1/V_2)(c/\pi N_{min})^2 \qquad (3)$$

In this refrigeration system, the minimum number of rotations of the compression mechanism is $N_{min}$ and the length of the first communication path is longer than $S_1/2(1/V_1+1/V_2)(c/\pi N_{min})^2$. In other words, in this refrigeration system, the condition of the above inequality expression (3) is satisfied. For this reason, in this refrigeration system, the cutoff frequency of the $\pi$-type silencer can be made equal to or less than the minimum number of rotations of the compression mechanism.

A refrigeration system according to a third aspect of the present invention is the refrigeration system according to the first aspect or the second aspect of the present invention, wherein the length of the first communication path is shorter than $c/2f_t$ (where c is the speed of sound in the refrigerant and $f_t$ is a target reduction highest frequency).

Incidentally, a decay rate $\sigma$ of the $\pi$-type silencer is expressed by the following expression (4).

$$\sigma = $$
$$\sqrt{[\{\cos(l_1\omega/c)-V_1\omega\sin(l_1\omega/c)/cS_1\}^2+1/S^2\{(V_1+V_2)\omega\cos(l_1\omega/c)/c+S_1\sin(l_1\omega/c)-V_1V_2\omega^2\sin(l_1\omega/c)/c^2S_1\}^2]} \qquad (4)$$

(Here, $l_1$ is the length of the communication path, $\omega$ is pulsation angular frequency, c is the speed of sound in the refrigerant, $S_1$ is the cross-sectional area of the communication path, S is the cross-sectional area of a refrigerant passage that is communicated with the $\pi$-type silencer, $V_1$ is the volume of the first silencing space, and $V_2$ is the volume of the second silencing space.)

Here, for example, assuming that $V_1$ = 300 cc, $V_2$ = 300 cc, S = 0.785 cm$^2$, $S_1$ = 0.785 cm$^2$, c = 230 m/s and $l_1$ = 0.3 m, when the decay rate $\sigma$ is calculated from expression (4), a tendency appears where the decay rate $\sigma$ first decreases and thereafter again increases in accompaniment with an increase in the frequency (in other words, a minimum value exists). Additionally, this frequency region has a tendency to drop as $l_1$ becomes longer. The frequency that corresponds to the minimum value of the decay rate $\sigma$ corresponds to the frequency at which resonance arises in the communication path (below, this will be called a resonance frequency $f_r$) and is expressed by the following expression (5).

$$f_r = c/2l_1 \qquad (5)$$

Here, in order to reduce the frequency that is smaller than the target reduction highest frequency $f_t$, it is necessary to satisfy the following expression (6).

$$c/2l_1 > f_t \qquad (6)$$

Additionally, when this inequality expression (6) is solved in regard to $l_1$, it becomes the following expression (7).

$$l_1 < c/2f_t \qquad\qquad (7)$$

In this refrigeration system, the length of the first communication path is shorter than $c/2f_t$. In other words, in this refrigeration system, the condition of the above inequality expression (7) is satisfied. For this reason, in this refrigeration system, the frequency that is smaller than the target reduction highest frequency $f_t$ can be reduced.

A refrigeration system according to a fourth aspect of the present invention is the refrigeration system according to any of the first aspect to the third aspect of the present invention, wherein the first silencing space is a space inside an oil separator or an accumulator.

In this refrigeration system, the space inside an oil separator or an accumulator serves as the first silencing space. For this reason, this refrigeration system can be simplified.

A refrigeration system according to a fifth aspect of the present invention is the refrigeration system according to any of the first aspect to the fourth aspect of the present invention, wherein the π-type silencer further includes a third silencing space and a second communication path that allows the second silencing space and the third silencing space to be communicated.

In this refrigeration system, the third silencing space and the second communication path are disposed. For this reason, in this refrigeration system, pressure pulsation can be reduced even more.

<Advantageous Effects of the Invention>

In the refrigeration system according to the first aspect of the present invention, pressure pulsation can be sufficiently reduced even when carbon dioxide is employed as a refrigerant.

In the refrigeration system according to the second aspect of the present invention, the cutoff frequency of the π-type silencer can be made equal to or less than the minimum number of rotations of the compression mechanism.

In the refrigeration system according to the third aspect of the present invention, a frequency that is smaller than the target reduction highest frequency $f_t$ can be reduced.

The refrigeration system according to the fourth aspect of the present invention can be simplified.

In the refrigeration system according to the fifth aspect of the present invention, pressure pulsation can be reduced even more.

**BRIEF DESCRIPTION OF THE DRAWINGS**

FIG. 1 is a diagram of a refrigerant circuit of an air conditioner pertaining to an embodiment of the present invention;

FIG. 2 is a longitudinal sectional diagram of a π-type silencer that is incorporated in the refrigerant circuit of the air conditioner pertaining to the embodiment of the present invention;

FIG 3 is a longitudinal sectional diagram of a π-type silencer pertaining to modification A;

FIG. 4 is a longitudinal sectional diagram of a π-type silencer pertaining to modification A;

FIG. 5 is a longitudinal sectional diagram of a π-type silencer pertaining to modification B;

FIG 6 is a longitudinal sectional diagram of a π-type silencer pertaining to modification B;

FIG. 7 is a longitudinal sectional diagram of a π-type silencer pertaining to modification B;

FIG. 8 is a longitudinal sectional diagram of a π-type silencer pertaining to modification C;

FIG. 9 is a longitudinal sectional diagram of a π-type silencer pertaining to modification D;

FIG 10 is a longitudinal sectional diagram of a π-type silencer pertaining to modification E;

FIG. 11 is a longitudinal sectional diagram of a π-type silencer pertaining to modification F;

FIG 12 is a longitudinal sectional diagram of a π-type silencer pertaining to modification F; and

FIG. 13 is a longitudinal sectional diagram of a π-type silencer pertaining to modification G.

**EXPLANATION OF THE REFERENCE NUMERALS**

1 Air Conditioner (Refrigeration System)
11 Compressor (Compression Mechanism)
13 Outdoor Heat Exchanger (Radiator, Evaporator)
15 First Electrically Powered Expansion Valve (Expansion Mechanism)

17 Second Electrically Powered Expansion Valve (Expansion Mechanism)

31 Indoor Heat Exchanger (Radiator, Evaporator)

20, 20a, 20b, 20c, 20d, 20e, 20f, 20g, 20h, 20i, 20j, 20k π-type Silencer

201, 201c, 201i First Silencing Space

202, 202c, 202i Second Silencing Space

203, 203a, 203b, 203c, 203f, 203g, 203i, 203j, 203k Communication Path (First Communication Path)

## BEST MODE FOR CARRYING OUT THE INVENTION

<Configuration of Air Conditioner>

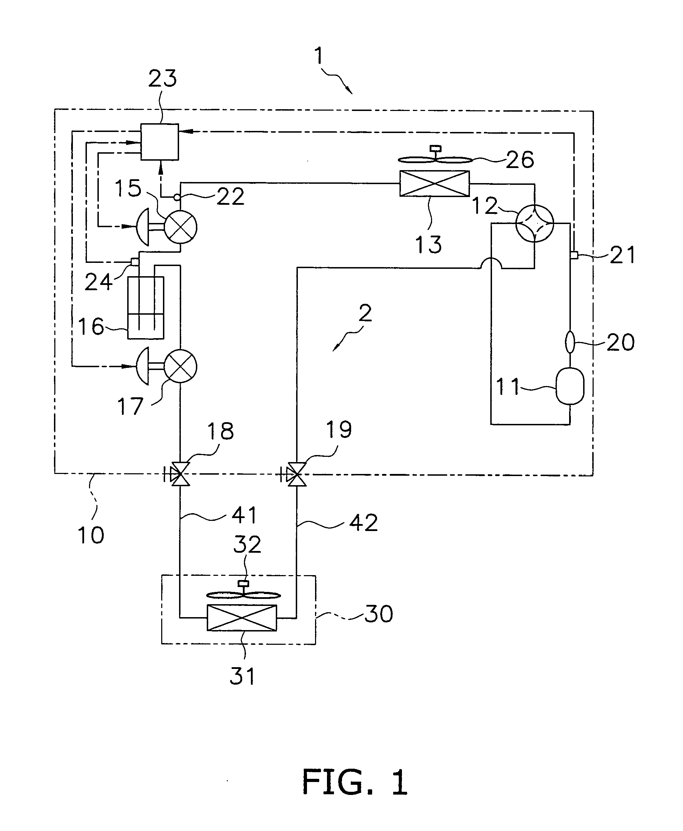

FIG. 1 shows a general refrigerant circuit 2 of an air conditioner 1 pertaining to an embodiment of the present invention.

The air conditioner 1 uses carbon dioxide as a refrigerant, is capable of cooling operation and heating operation, and is mainly configured by the refrigerant circuit 2, blower fans 26 and 32, a controller 23, a high-pressure pressure sensor 21, a temperature sensor 22, an intermediate-pressure pressure sensor 24 and the like.

The refrigerant circuit 2 is mainly equipped with a compressor 11, a π-type silencer 20, a four-way switch valve 12, an outdoor heat exchanger 13, a first electrically powered expansion valve 15, a liquid receiver 16, a second electrically powered expansion valve 17 and an indoor heat exchanger 31, and the devices are, as shown in FIG. 1, interconnected via refrigerant pipes.

Additionally, in the present embodiment, the air conditioner 1 is a discrete-type air conditioner and may also be said to be configured by: an indoor unit 30 that mainly includes the indoor heat exchanger 31 and the indoor fan 32; an outdoor unit 10 that mainly includes the compressor 11, the π-type silencer 20, the four-way switch valve 12, the outdoor heat exchanger 13, the first electrically powered expansion valve 15, the liquid receiver 16, the second electrically powered expansion valve 17, the high-pressure pressure sensor 21, the intermediate-pressure pressure sensor 24, the temperature sensor 22 and the controller 23; a first communication pipe 41 that interconnects a refrigerant liquid pipe of the indoor unit 30 and a refrigerant liquid pipe of the outdoor unit 10; and a second communication pipe 42 that interconnects a refrigerant gas pipe of the indoor unit 30 and a refrigerant gas pipe of the outdoor unit 10. It will be noted that the refrigerant liquid pipe of the outdoor unit 10 and the first communication pipe 41 are interconnected via a first close valve 18 of the outdoor unit 10 and that the refrigerant gas pipe of the outdoor unit 10 and the second communication pipe 42 are interconnected via a second close valve 19 of the outdoor unit 10.

(1) Indoor Unit

The indoor unit 30 mainly includes the indoor heat exchanger 31, the indoor fan 32 and the like.

The indoor heat exchanger 31 is a heat exchanger for causing heat exchange between the refrigerant and room air that is air inside an air-conditioned room.

The indoor fan 32 is a fan for taking the air inside the air-conditioned room into the inside of the unit 30 and blowing out air-conditioned air, which is air after heat has been exchanged with the refrigerant via the indoor heat exchanger 31, back inside the air-conditioned room.

Additionally, because the indoor unit 30 employs this configuration, the indoor unit 30 is capable, during cooling operation, of generating air-conditioned air (cool air) by causing heat to be exchanged between the room air that has been taken inside by the indoor fan 32 and liquid refrigerant that flows through the indoor heat exchanger 31 and is capable, during heating operation, of generating air-conditioned air (warm air) by causing heat to be exchanged between the room air that has been taken inside by the indoor fan 32 and supercritical refrigerant that flows through the indoor heat exchanger 31.

(2) Outdoor Unit

The outdoor unit 10 mainly includes the compressor 11, the π-type silencer 20, the four-way switch valve 12, the outdoor heat exchanger 13, the first electrically powered expansion valve 15, the liquid receiver 16, the second electrically powered expansion valve 17, the outdoor fan 26, the controller 23, the high-pressure pressure sensor 21, the temperature sensor 22, the intermediate-pressure pressure sensor 24 and the like.

The compressor 11 is a device for sucking in low-pressure gas refrigerant that flows through a suction pipe, compressing the low-pressure gas refrigerant to a supercritical state, and thereafter discharging the supercritical refrigerant to a discharge pipe. It will be noted that, in the present embodiment, the compressor 11 is an inverter rotary-type compressor.

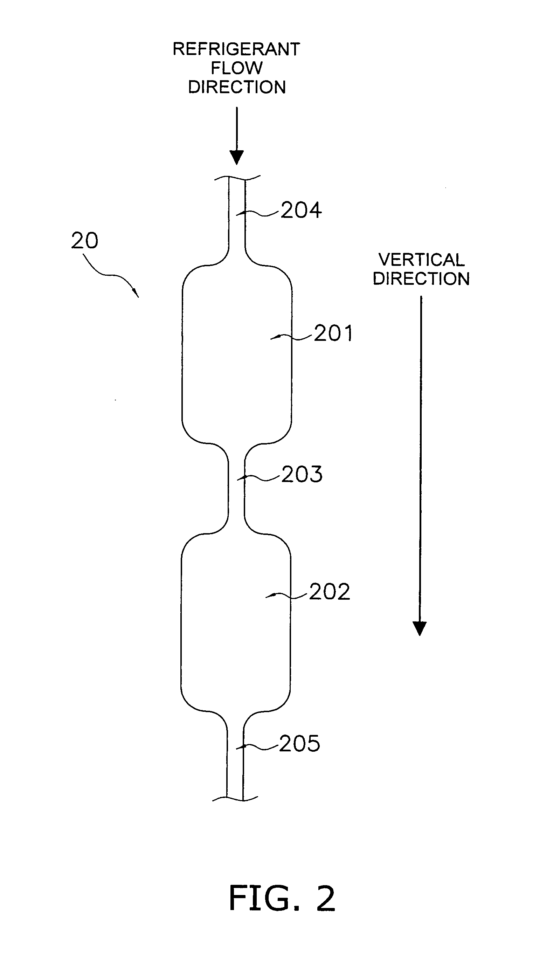

The π-type silencer 20 is, as shown in FIG. 1, disposed between a discharge side of the compressor 11 and the four-way switch valve 12. The π-type silencer 20 is, as shown in FIG. 2, configured by a first silencing space 201, a second silencing space 202 and a communication path 203 that allows the first silencing space 201 and the second silencing space 202 to be communicated. It will be noted that, in the air conditioner 1 pertaining to the present embodiment, a discharge path of the compressor 11 is connected to the first silencing space 201 via a first refrigerant passage 204 and that a heat transfer path of the outdoor heat exchanger 13 or the indoor heat exchanger 31 is connected to the second silencing space 202 via a second refrigerant passage 205. In other words, the refrigerant always flows in the order of: the first silencing space 201 → the communication path 203 → the second silencing space 202. The first silencing space 201 is a substantially cylindrical space, with the refrigerant passage 204 being connected to the upper end thereof in the axial direction and the communication path 203 being connected to the lower end thereof in the axial direction. The second silencing space 202 is a substantially cylindrical space, with the communication path 203 being connected to the upper end thereof in the axial direction and the refrigerant passage 205 being connected to the lower end thereof in the axial direction. The communication path 203 is a substantially cylindrical passage whose radius is smaller than the radii of the first silencing space 201 and the second silencing space 202, and the first silencing space 201 and the second silencing space 202 are connected to both sides of the communication path 203. It will be noted that, in the π-type silencer 20 pertaining to the present embodiment, the axes of the first silencing space 201, the second silencing space 202 and the communication path 203 are superposed. Additionally, the length of the communication path 203 is longer than $S_1/2(1/V_1+1/V_2)(c/\pi N_{min})^2$ and shorter than $c/2f_t$. Here, $S_1$ is the cross-sectional area of the communication path 203, $V_1$ is the volume of the first silencing space 201, $V_2$ is the volume of the second silencing space 202, c is the speed of sound in carbon dioxide (when the pressure is 10 MPa, the density becomes 221.6 kg/m$^3$ and the speed of sound becomes 252 m/sec), π is pi, $N_{min}$ is the minimum number of rotations of the compressor 11, and $f_t$ is a target reduction highest frequency. It will be noted that, in the air conditioner 1 pertaining to the present embodiment, the π-type silencer 20 is housed in the outdoor unit 10 such that the first silencing space 201 and the second silencing space 202 are arranged one above the other along the vertical direction.

The four-way switch valve 12 is a valve for switching the flow direction of the refrigerant in correspondence to each operation and is capable, during cooling operation, of interconnecting the discharge side of the compressor 11 and a high temperature side of the outdoor heat exchanger 13 and also interconnecting the suction side of the compressor 11 and a gas side of the indoor heat exchanger 31 and is capable, during heating operation, of interconnecting the discharge side of the compressor 11 and the second close valve 19 and also interconnecting the suction side of the compressor 11 and a gas side of the outdoor heat exchanger 13.

The outdoor heat exchanger 13 is capable, during cooling operation, of using air outside the air-conditioned room as a heat source to cool the high-pressure supercritical refrigerant that has been discharged from the compressor 11 and is capable, during heating operation, of evaporating the liquid refrigerant that returns from the indoor heat exchanger 31.

The first electrically powered expansion valve 15 is for depressurizing the supercritical refrigerant (during cooling operation) that flows out from a low temperature side of the outdoor heat exchanger 13 or the liquid refrigerant (during heating operation) that flows in through the liquid receiver 16.

The liquid receiver 16 is for storing surplus refrigerant in accordance with the operating mode and the air conditioning load.

The second electrically powered expansion valve 17 is for depressurizing the liquid refrigerant (during cooling operation) that flows in through the liquid receiver 16 or the supercritical refrigerant (during heating operation) that flows out from a low temperature side of the indoor heat exchanger 31.

The outdoor fan 26 is a fan for taking outdoor air into the inside of the unit 10 and discharging the air after the air has exchanged heat with the refrigerant via the outdoor heat exchanger 13.

The high-pressure pressure sensor 21 is disposed on the discharge side of the compressor 11.

The temperature sensor 22 is disposed on the outdoor heat exchanger side of the first electrically powered expansion valve 15.

The intermediate-pressure pressure sensor 24 is disposed between the first electrically powered expansion valve 15 and the liquid receiver 16.

The controller 23 is communicably connected to the high-pressure pressure sensor 21, the temperature sensor 22, the intermediate-pressure pressure sensor 24, the first electrically powered expansion valve 15, the second electrically powered expansion valve 17 and the like and controls the openings of the first electrically powered expansion valve 15 and the second electrically powered expansion valve 17 on the basis of temperature information that is sent from the temperature sensor 22, high-pressure pressure information that is sent from the high-pressure pressure sensor 21 and intermediate-pressure pressure information that is sent from the intermediate-pressure pressure sensor 24.

<Operation of Air Conditioner>

Operation of the air conditioner 1 will be described using FIG 1. The air conditioner 1 is, as mentioned above, capable of performing cooling operation and heating operation.

(1) Cooling Operation

During cooling operation, the four-way switch valve 12 is in the state indicated by the solid lines in FIG. 1, that is, a state where the discharge side of the compressor 11 is connected to the high temperature side of the outdoor heat exchanger 13 and where the suction side of the compressor 11 is connected to the second close valve 19. Further, at this time, the first close valve 18 and the second close valve 19 are opened.

When the compressor 11 is started in this state of the refrigerant circuit 2, gas refrigerant is sucked into the compressor 11, is compressed to a supercritical state, is thereafter sent to the outdoor heat exchanger 13 via the four-way switch valve 12, and is cooled in the outdoor heat exchanger 13. It will be noted that, at this time, pressure pulsation of the refrigerant is dampened by the π-type silencer 20.

Then, the supercritical refrigerant that has been cooled is sent to the first electrically powered expansion valve 15. Then, the supercritical refrigerant that has been sent to the first electrically powered expansion valve 15 is depressurized to a saturated state and is thereafter sent to the second electrically powered expansion valve 17 via the liquid receiver 16. The refrigerant in the saturated state that has been sent to the second electrically powered expansion valve 17 is depressurized, becomes liquid refrigerant, is thereafter supplied to the indoor heat exchanger 31 via the first close valve 18, cools the room air, is evaporated and becomes gas refrigerant.

Then, the gas refrigerant is sucked back into the compressor 11 via the second close valve 19 and the four-way switch valve 12. In this manner, cooling operation is performed.

(2) Heating Operation

During heating operation, the four-way switch valve 12 is in the state indicated by the broken lines in FIG. 1, that is, a state where the discharge side of the compressor 11 is connected to the second close valve 19 and where the suction side of the compressor 11 is connected to the gas side of the outdoor heat exchanger 13. Further, at this time, the first close valve 18 and the second close valve 19 are opened.

When the compressor 11 is started in this state of the refrigerant circuit 2, gas refrigerant is sucked into the compressor 11, is compressed to a supercritical state, and is thereafter supplied to the indoor heat exchanger 31 via the four-way switch valve 12 and the second close valve 19. It will be noted that, at this time, pressure pulsation of the refrigerant is dampened by the π-type silencer 20.

Then, the supercritical refrigerant heats the room air in the indoor heat exchanger 31 and is cooled. The supercritical refrigerant that has been cooled is sent to the second electrically powered expansion valve 17 through the first close valve 18. The supercritical refrigerant that has been sent to the second electrically powered expansion valve 17 is depressurized to a saturated state and is thereafter sent to the first electrically powered expansion valve 15 via the liquid receiver 16. The refrigerant in the saturated state that has been sent to the first electrically powered expansion valve 15 is depressurized, becomes liquid refrigerant, is thereafter sent to the outdoor heat exchanger 13, is evaporated in the outdoor heat exchanger 13 and becomes gas refrigerant. Then, the gas refrigerant is sucked back into the compressor 11 via the four-way switch valve 12. In this manner, heating operation is performed.

<Characteristics of Air Conditioner>

(1)

In the air conditioner 1 pertaining to the present embodiment, the π-type silencer 20 is connected to the discharge pipe of the compressor 11. For this reason, in the air conditioner 1, pressure pulsation can be sufficiently reduced.

(2)

In the air conditioner 1 pertaining to the present embodiment, the π-type silencer 20 is housed in the outdoor unit 10 such that the first silencing space 201 and the second silencing space 202 are arranged one above the other along the vertical direction. For this reason, in the air conditioner 1, refrigerating machine oil can be prevented from collecting in the π-type silencer 20.

(3)

In the π-type silencer 20 pertaining to the present embodiment, the length of the communication path is longer than $S_1/2(1/V_1+1/V_2)(c/\pi N_{min})^2$ and shorter than $c/2f_t$. For this reason, in the air conditioner 1, the cutoff frequency of the π-type silencer 20 can be made equal to or less than the minimum number of rotations of the compression mechanism, and a frequency that is smaller than the target reduction highest frequency $f_t$ can be reduced.

<Modifications>

(A)

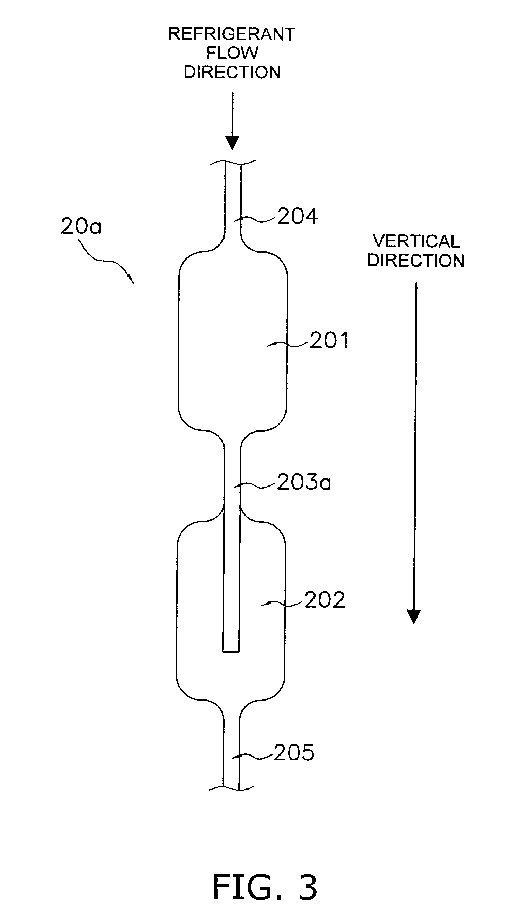

In the air conditioner 1 pertaining to the preceding embodiment, there was employed the π-type silencer 20 that includes the communication path 203 that extends along the axial direction of the first silencing space 201 from the lower end of the first silencing space 201 and is connected to the upper end of the second silencing space 202, but instead of the π-type silencer 20, there may also be employed a π-type silencer 20a such as shown in FIG. 3. In the π-type silencer 20a, a communication path 203a that extends along the axial direction of the first silencing space 201 from the lower end of the first silencing space 201 penetrates the upper end of the second silencing space 202 and is inserted into the inside of the second silencing space 202. When the π-type silencer 20a is employed, just the communication path can be extended long without having to change the size of the entire π-type silencer. In a π-type silencer, the longer the communication path is, the larger the pressure pulsation reduction effect becomes. In other words, the pressure pulsation reduction effect can be made larger without having to change the size of the entire π-type silencer.

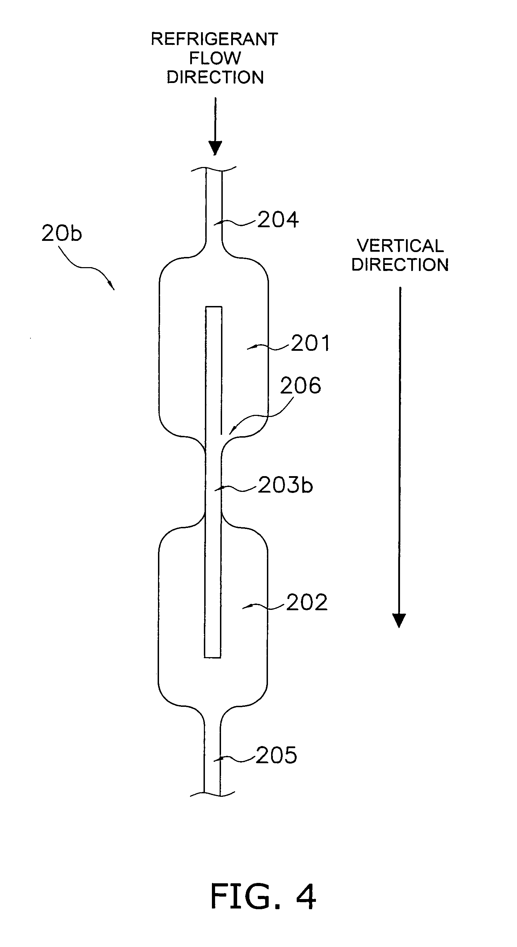

Further, there may also be employed a π-type silencer 20b such as shown in FIG 4. In the π-type silencer 20b, a communication path 203b extends along the axis of the first silencing space 201 from the inside of the first silencing space 201 and through the lower end of the first silencing space 201 to the outside, and then penetrates the upper end of the second silencing space 202 and extends into the inside of the second silencing space 202. Additionally, in the π-type silencer 20b, an oil return hole 206 is disposed in the lower end portion of the communication path 203b inside the first silencing space 201. When the π-type silencer 20b is employed, refrigerating machine oil can be prevented from collecting in the π-type silencer, and just the communication path can be extended long without having to change the size of the entire π-type silencer. In a π-type silencer, the longer the communication path is, the larger the pressure pulsation reduction effect becomes. In other words, refrigerating machine oil can be prevented from collecting in the π-type silencer, and the pressure pulsation reduction effect can be made larger without having to change the size of the entire π-type silencer.

(B)

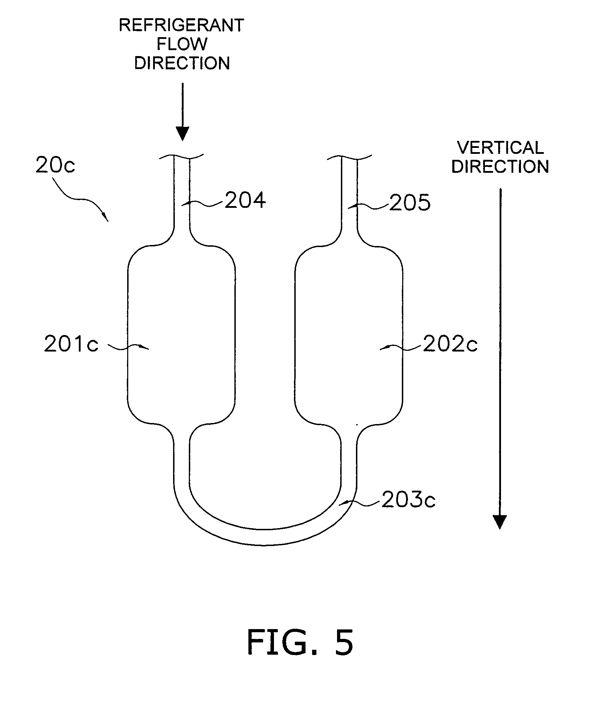

In the air conditioner 1 pertaining to the preceding embodiment, there was employed the π-type silencer 20 where the axes of the first silencing space 201, the second silencing space 202 and the communication path 203 are superposed on a straight line and face the vertical direction, but instead of the π-type silencer 20, there may also be employed a π-type silencer 20c such as shown in FIG. 5. In the π-type silencer 20c, a first silencing space 201c and a second silencing space 202c are disposed side-by-side, and the axes of both of the silencing spaces 201c and 202c are along the vertical direction but are not superposed on a straight line. Additionally, in the π-type silencer 20c, a communication path 203c is U-shaped and extends from the lower end of the first silencing space 201c to the lower end of the second silencing space 202c. When the π-type silencer 20c is employed, the entire length of the π-type silencer can be shortened. Consequently, the options for the disposition of the π-type silencer in the outdoor unit 10 can be expanded.

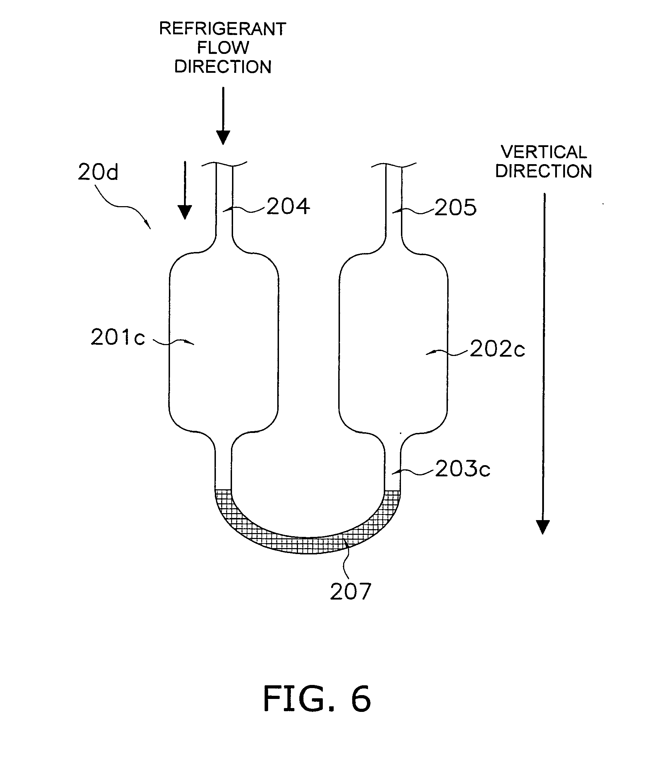

Further, there may also be employed a π-type silencer 20d such as shown in FIG. 6. The π-type silencer 20d is one where a mesh member 207 fills the communication path 203c of the π-type silencer 20c shown in FIG. 5. When the π-type silencer 20d is employed, reflection waves can be prevented from arising inside the communication path 203c.

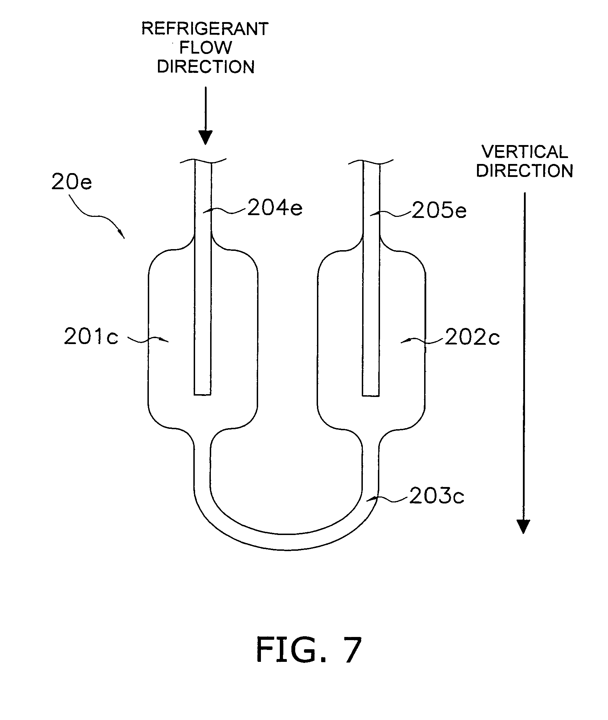

Further, there may also be employed a π-type silencer 20e such as shown in FIG. 7. The π-type silencer 20e is one where a first refrigerant passage 204e and a second refrigerant passage 205e are inserted into the insides of the first silencing space 201c and the second silencing space 202c of the π-type silencer 20c shown in FIG. 5. When the π-type silencer 20e is employed, it can be ensured that refrigerating machine oil does not collect in the first silencing space 201 c and the second silencing space 202c.

(C)

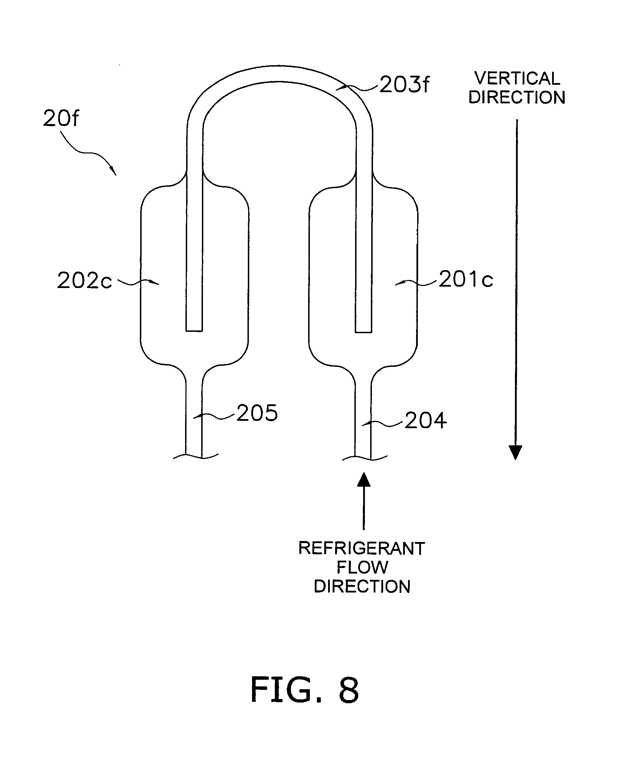

In the air conditioner 1 pertaining to the preceding embodiment, there was employed the π-type silencer 20 where the axes of the first silencing space 201, the second silencing space 202 and the communication path 203 are superposed on a straight line and face the vertical direction, but instead of the π-type silencer 20, there may also be employed a π-type silencer 20f such as shown in FIG. 8. In the π-type silencer 20f, a first silencing space 201c and a second silencing space 202c are disposed side-by-side, and the axes of both of the silencing spaces 201c and 202c are along the vertical direction but are not superposed on a straight line. Additionally, in the π-type silencer 20f, a communication path 203f is U-shaped, penetrates the upper end of the first silencing space 201c from the inside of the first silencing space 201c, extends to the upper end of the second silencing space 202c, penetrates the upper end of the second silencing space 202c and extends into the inside of the second silencing space 202c. When the π-type silencer 20f is employed, the entire length of the π-type silencer can be shortened, refrigerating machine oil can be prevented from collecting in the first silencing space 201c and the second silencing space 202c, and just the communication path can be extended long without having to change the size of the entire π-type silencer. Consequently, the options for the disposition of the π-type silencer in the outdoor unit 10 can be expanded, refrigerating machine oil can be prevented from collecting in the first silencing space 201c and the second silencing space 202c, and the pressure pulsation reduction effect can be made larger without having to change the size of the entire π-type silencer.

(D)

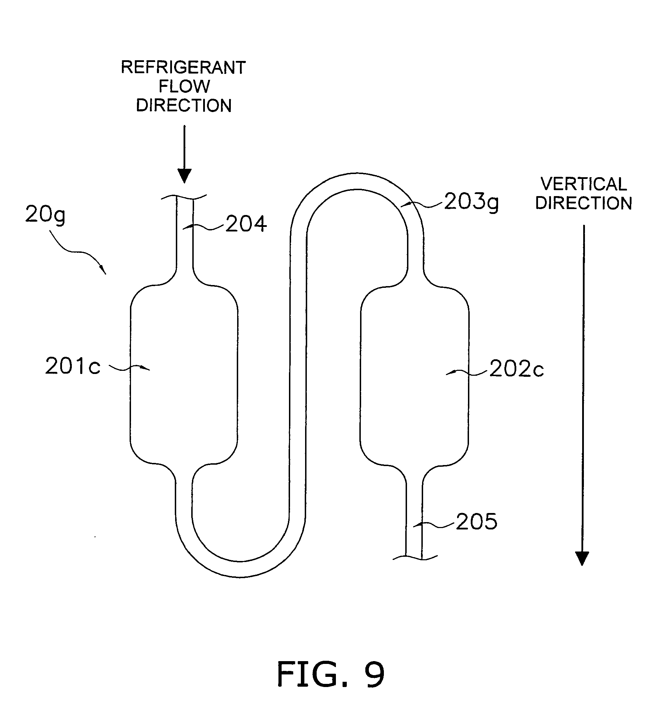

In the air conditioner 1 pertaining to the preceding embodiment, there was employed the π-type silencer 20 where the axes of the first silencing space 201, the second silencing space 202 and the communication path 203 are superposed on a straight line and face the vertical direction, but instead of the π-type silencer 20, there may also be employed a π-type silencer 20g such as shown in FIG. 9. In the π-type silencer 20g, a first silencing space 201 c and a second silencing space 202c are disposed side-by-side, and the axes of both of the silencing spaces 201c and 202c are along the vertical direction but are not superposed on a straight line. Additionally, in the π-type silencer 20g, a communication path 203g is S-shaped and extends from the lower end of the first silencing space 201 c to the upper end of the second silencing space 202c. When the π-type silencer 20g is employed, refrigerating machine oil can be prevented from collecting in the π-type silencer, the entire length of the π-type silencer can be shortened, and the communication path can be made longer without having to change the size of the entire π-type silencer. In a π-type silencer, the longer the communication path is, the larger the pressure pulsation reduction effect becomes. In other words, refrigerating machine oil can be prevented from collecting in the π-type silencer, the options for the disposition of the π-type silencer in the outdoor unit 10 can be expanded, and the pressure pulsation reduction effect can be made larger without having to change the size of the entire π-type silencer. It will be noted that the communication path 203g that extends from the lower end of the first silencing space 201 c may also penetrate the upper end of the second silencing space 202c and extend into the inside of the second silencing space 202c.

(E)

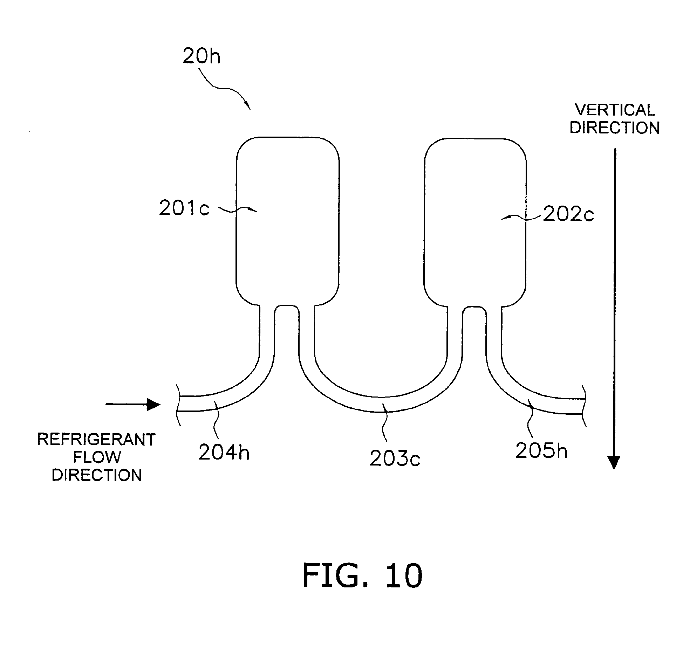

In the air conditioner 1 pertaining to the preceding embodiment, there was employed the π-type silencer 20 where the axes of the first silencing space 201, the second silencing space 202 and the communication path 203 are superposed on a straight line and face the vertical direction, but instead of the π-type silencer 20, there may also be employed a π-type silencer 20h such as shown in FIG 10. In the π-type silencer 20h, a first silencing space 201c and a second silencing space 202c are disposed side-by-side, and the axes of both of the silencing spaces 201 c and 202c are along the vertical direction but are not superposed on a straight line. Additionally, in the π-type silencer 20h, a first refrigerant passage 204h is connected to the lower end of the first silencing space 201 c, and a second refrigerant passage 205h is connected to the lower end of the second silencing space 202c. Additionally, in the π-type silencer 20h, a communication path 203c is U-shaped and extends from the lower end of the first silencing space 201c to the lower end of the second silencing space 202c. When the π-type silencer 20h is employed, refrigerating machine oil can be prevented from collecting in the π-type silencer, and the entire length of the π-type silencer can be made shorter. Consequently, refrigerating machine oil can be prevented from collecting in the π-type silencer, and the options for the disposition of the π-type silencer in the outdoor unit 10 can be expanded.

(F)

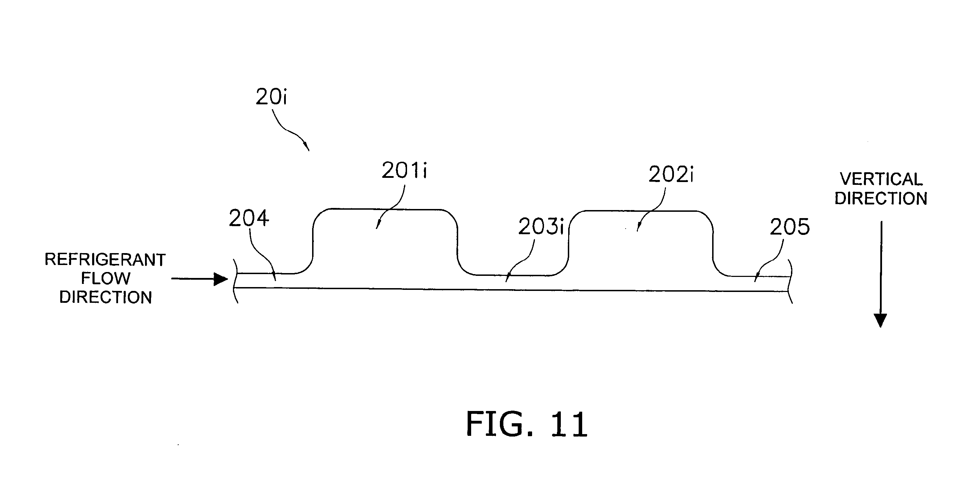

In the air conditioner 1 pertaining to the preceding embodiment, there was employed the π-type silencer 20 where the axes of the first silencing space 201, the second silencing space 202 and the communication path 203 are superposed on a straight line and face the vertical direction, but instead of the π-type silencer 20, there may also be employed a π-type silencer 20i such as shown in FIG. 11. The π-type silencer 20i is housed in the outdoor unit 10 such that axes of a first silencing space 201i and a second silencing space 202i are superposed on a straight line and face the horizontal direction. Additionally, in the π-type silencer 20i, a first refrigerant passage 204 is connected to the lowermost portion of the outer end of the first silencing space 201i, and a second refrigerant passage 205 is connected to the lowermost portion of the outer end of the second silencing space 202i. Additionally, in the π-type silencer 20i, a communication path 203i interconnects the lowermost portion of the inner end of the first silencing space 201 i and the lowermost portion of the inner end of the second silencing space 202i. When the π-type silencer 20i is employed, refrigerating machine oil can be prevented from collecting in the π-type silencer.

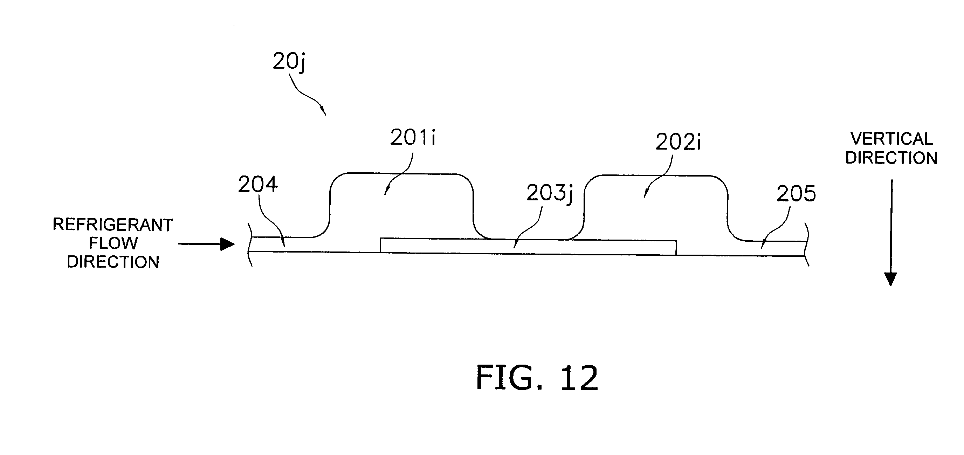

Further, there may also be employed a π-type silencer 20j such as shown in FIG. 12. In the π-type silencer 20j, a communication path 203j penetrates the lowermost portion of the inner end of the first silencing space 201i and the lowermost portion of the inner end of the second silencing space 202i and extends into the inside of the second silencing space 202i from the inside of the first silencing space 201 i. When the π-type silencer 20j is employed, refrigerating machine oil can be prevented from collecting in the π-type silencer, and the communication path can be made longer without having to change the size of the entire π-type silencer. In a π-type silencer, the longer the communication path is, the larger the pressure pulsation reduction effect becomes. In other words, refrigerating machine oil can be prevented from collecting in the π-type silencer, and the pressure pulsation reduction effect can be made larger without having to change the size of the entire π-type silencer.

(G)

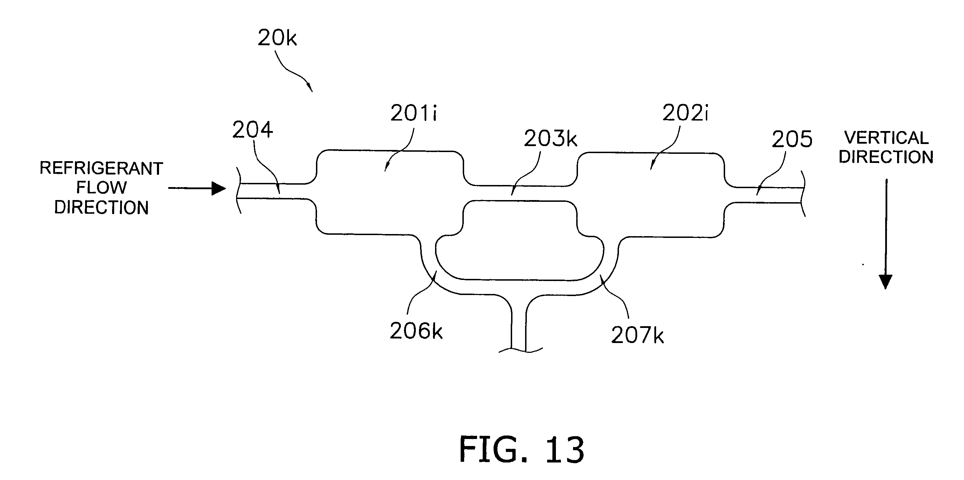

In the air conditioner 1 pertaining to the preceding embodiment, there was employed the π-type silencer 20 where the axes of the first silencing space 201, the second silencing space 202 and the communication path 203 are superposed on a straight line and face the vertical direction, but instead of the π-type silencer 20, there may also be employed a π-type silencer 20k such as shown in FIG. 13. The π-type silencer 20k is housed in the outdoor unit 10 such that axes of a first silencing space 201i, a second silencing space 202i and a communication path 203k are superposed on a straight line and face the horizontal direction. Additionally, in the π-type silencer 20k, a first oil drain passage 206k extends from the lower end of the first silencing space 201 i, and a second oil drain passage 207k extends from the lower end of the second silencing space 202i. It will be noted that the first oil drain passage 206k and the second oil drain passage 207k merge midway and are connected to the suction pipe of the compressor 11 via a capillary. When the π-type silencer 20k is employed, refrigerating machine oil can be prevented from collecting in the π-type silencer. It will be noted that the communication path 203k may also penetrate the center of the inner end of the first silencing space 201 i and the center of the second silencing space 202i and extend into the inside of the second silencing space 202i from the inside of the first silencing space 201i.

(H)

In the air conditioner 1 pertaining to the preceding embodiment, the π-type silencer 20 was connected to the discharge pipe of the compressor 11, but instead of this, the π-type silencer 20 may also be connected to the suction pipe of the compressor 11. Further, the π-type silencer 20 may also be connected to both the discharge pipe and the suction pipe of the compressor 11.

(I)

In the air conditioner 1 pertaining to the preceding embodiment, although it was not touched upon, when vessels such as an oil separator, an accumulator and a liquid receiver are present in the refrigerant circuit 2, the spaces inside of those may also be utilized as the first silencing space or the second silencing space. By so doing, the refrigerant circuit 2 can be simplified.

(J)

In the air conditioner 1 pertaining to the preceding embodiment, there was employed the π-type silencer 20 in which the two silencing spaces 201 and 202 are present, but instead of this, there may also be employed a π-type silencer where three or more silencing spaces are present. By so doing, an even larger pressure pulsation reduction effect can be expected.

(K)

In the air conditioner 1 pertaining to the preceding embodiment, there was employed an inverter rotary type compressor, but instead of this, there may also be employed a constant speed rotary compressor.

(L)

In the air conditioner 1 pertaining to the preceding embodiment, carbon dioxide was employed as the refrigerant, but instead of this, a refrigerant such as R22 or R410A may also be employed. Incidentally, when the pressure is 1.5 MPa, the density becomes 56.4 kg/m$^3$ and the speed of sound becomes 169 m/sec. Further, when the pressure is 2.4 MPa, the density becomes 83.3 kg/m$^3$ and the speed of sound becomes 174 m/sec.

(M)

In the π-type silencer 20 pertaining to the preceding embodiment, the shape of the first silencing space 201 was cylindrical, but in the present invention, the shape of the first silencing space 201 is not particularly limited and may also be a cuboid or a regular hexahedron, for example.

(N)

In the π-type silencer 20 pertaining to the preceding embodiment, the shape of the second silencing space 202 was cylindrical, but in the present invention, the shape of the second silencing space 202 is not particularly limited and may also be a cuboid or a regular hexahedron, for example.

(O)

In the π-type silencer 20 pertaining to the preceding embodiment, the first silencing space 201 and the second silencing space 202 were configured to have the same shape and the same volume, but in the present invention, the shapes and the volumes of the first silencing space 201 and the second silencing space 202 may also be different.

(P)

In the π-type silencer 20 pertaining to the preceding embodiment, the shape of the communication path 203 was cylindrical, but in the present invention, the shape of the communication path 203 is not particularly limited and may also be a cuboid, for example.

**INDUSTRIAL APPLICABILITY**

The refrigeration system pertaining to the present invention has the characteristic that it can sufficiently reduce pressure pulsation even when carbon dioxide is employed as a refrigerant, so the refrigeration system is suited to a refrigeration system that employs a supercritical refrigerant such as carbon dioxide as refrigerant.

**Claims**

1. A refrigeration system that is filled with carbon dioxide as a refrigerant, the refrigeration system comprising:

a compression mechanism (11) that compresses the refrigerant;
a radiator (13) that causes the refrigerant that is discharged from the compression mechanism to radiate heat;
an expansion mechanism (15) that depressurizes the refrigerant that flows out from the radiator;
an evaporator (31) that causes the refrigerant that flows out from the expansion mechanism to evaporate; and
a π-type silencer (20, 20a, 20b, 20c, 20d, 20e, 20f, 20g, 20h, 20i, 20j, 20k) that includes a first silencing space (201, 201c, 201i), a second silencing space (202, 202c, 202i) and a first communication path (203, 203a, 203b, 203c, 203f, 203g, 203i, 203j, 203k) that allows the first silencing space and the second silencing space to be communicated, with the π-type silencer being incorporated in at least one of a section between a refrigerant discharge side of the compression mechanism and an inlet side of the radiator and a section between an outlet side of the evaporator and a refrigerant suction side of the compression mechanism.

2. The refrigeration system according to claim 1, wherein
the compression mechanism is a rotary compression mechanism whose minimum number of rotations is $N_{min}$, and the length of the first communication path is longer than $S_1/2(1/V_1+1/V_2)(c/\pi N_{min})^2$ (where $S_1$ is the cross-sectional area of the communication path, $V_1$ is the volume of the first silencing space, $V_2$ is the volume of the second silencing space, c is the speed of sound in the refrigerant, π is pi, and $N_{min}$ is the minimum number of rotations of the compression mechanism).

3. The refrigeration system according to claim 1 or 2, wherein the length of the first communication path is shorter than $c/2f_t$ (where c is the speed of sound in the refrigerant and $f_t$ is a target reduction highest frequency).

4. The refrigeration system according to any of claims 1 to 3, wherein the first silencing space is a space inside an oil separator or an accumulator.

**5.** The refrigeration system according to any of claims 1 to 4, wherein the π-type silencer further includes a third silencing space and a second communication path that allows the second silencing space and the third silencing space to be communicated.

FIG. 1

REFRIGERANT
FLOW
DIRECTION

204

20

VERTICAL
DIRECTION

201

203

202

205

FIG. 2

REFRIGERANT
FLOW
DIRECTION

20a

204

VERTICAL
DIRECTION

201

203a

202

205

# FIG. 3

FIG. 4

REFRIGERANT
FLOW
DIRECTION

VERTICAL
DIRECTION

20c

204

205

201c

202c

203c

FIG. 5

FIG. 6

EP 2 060 861 A1

REFRIGERANT
FLOW
DIRECTION

VERTICAL
DIRECTION

20e

204e

205e

201c

202c

203c

FIG. 7

20f

203f

202c

201c

205

204

VERTICAL
DIRECTION

REFRIGERANT
FLOW
DIRECTION

FIG. 8

REFRIGERANT
FLOW
DIRECTION

20g

204

203g

VERTICAL
DIRECTION

201c

202c

205

FIG. 9

FIG. 10

20i

201i 202i

VERTICAL
DIRECTION

204 203i 205

REFRIGERANT
FLOW
DIRECTION

# FIG. 11

EP 2 060 861 A1

20j

204　　201i　　203j　　202i　　205

VERTICAL
DIRECTION

REFRIGERANT
FLOW
DIRECTION

FIG. 12

FIG. 13

REFRIGERANT FLOW DIRECTION

VERTICAL DIRECTION

20k

204  201i  203k  202i  205

206k  207k

EP 2 060 861 A1

**INTERNATIONAL SEARCH REPORT**

| International application No. |
| --- |
| PCT/JP2007/066615 |

A. CLASSIFICATION OF SUBJECT MATTER
*F25B41/00*(2006.01)i, *F04B39/00*(2006.01)i, *F16L55/04*(2006.01)i, *F25B1/00*(2006.01)i, *F25B43/00*(2006.01)i

According to International Patent Classification (IPC) or to both national classification and IPC

B. FIELDS SEARCHED

Minimum documentation searched (classification system followed by classification symbols)
F25B41/00, F04B39/00, F16L55/04, F25B1/00, F25B43/00

Documentation searched other than minimum documentation to the extent that such documents are included in the fields searched
Jitsuyo Shinan Koho       1922-1996   Jitsuyo Shinan Toroku Koho   1996-2007
Kokai Jitsuyo Shinan Koho    1971-2007   Toroku Jitsuyo Shinan Koho   1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2005-98663 A  (Sanyo Electric Co., Ltd.), 14 April, 2005 (14.04.05), Par. Nos. [0001], [0005] to [0007]; Figs. 1 to 3 (Family: none) | 1-5 |
| Y | JP 1-107077 A  (Mitsubishi Electric Corp.), 24 April, 1989 (24.04.89), Claim 2; Fig. 1 (Family: none) | 1-5 |
| Y | JP 6-123525 A  (Matsushita Refrigeration Co.), 06 May, 1994 (06.05.94), Claim 1; Fig. 1 (Family: none) | 2-5 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 03 October, 2007 (03.10.07) | 16 October, 2007 (16.10.07) |

| Name and mailing address of the ISA/ | Authorized officer |
| --- | --- |
| Japanese Patent Office | |
| Facsimile No. | Telephone No. |

Form PCT/ISA/210 (second sheet) (April 2007)

# EP 2 060 861 A1

| | INTERNATIONAL SEARCH REPORT | International application No. |
|---|---|---|
| | | PCT/JP2007/066615 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2004-271019 A  (Aisin Seiki Co., Ltd.),<br>30 September, 2004 (30.09.04),<br>Claim 1; Fig. 2<br>(Family: none) | 3-5 |
| Y | JP 10-9715 A  (Hitachi, Ltd.),<br>16 January, 1998 (16.01.98),<br>Par. Nos. [0003] to [0009]; Fig. 2<br>(Family: none) | 4,5 |
| Y | JP 5-149254 A  (Sanyo Electric Co., Ltd.),<br>15 June, 1993 (15.06.93),<br>Fig. 3<br>(Family: none) | 6 |
| A | Microfilm of the specification and drawings annexed to the request of Japanese Utility Model Application No. 26791/1983(Laid-open No. 131978/1984)<br>(Toshiba Corp.),<br>04 September, 1984 (04.09.84),<br>Fig. 1<br>(Family: none) | 1-5 |
| A | Microfilm of the specification and drawings annexed to the request of Japanese Utility Model Application No. 178571/1987(Laid-open No. 83188/1989)<br>(Toyoda Automatic Loom Works, Ltd.),<br>02 June, 1989 (02.06.89),<br>Fig. 1<br>(Family: none) | 1-5 |
| A | JP 3-258995 A  (Matsushita Refrigeration Co.),<br>19 November, 1991 (19.11.91),<br>Claim 1<br>(Family: none) | 2-5 |

Form PCT/ISA/210 (continuation of second sheet) (April 2007)

27

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6010875 A

- JP 2004218934 A

**Non-patent literature cited in the description**

- **SAKAE YAMADA ; IWAO ŌTANI.** *Orifisu oyobi π-gata hairetsu kūkisō ni yoru myakudō jokyo,* December 1968, vol. 34 (268), 2139-2145

- The Japan Society of Mechanical Engineers. Gihodo Shuppan Co., Ltd, 20 September 2003, 190-193